# EUROPÄISCHE PATENTSCHRIFT

(11) **EP 0 324 144 B1**
(45) Veröffentlichungstag und Bekanntmachung des Hinweises auf die Patenterteilung: **22.02.1995**
(21) Anmeldenummer: 88121420.9
(22) Anmeldetag: 21.12.1988
(51) Int. Cl.: G06F 13/24

(54) **Datenverarbeitungssystem mit Anordung zur Identifizierung von Unterbrechungssignale abgebenden Einheiten**
Data-processing system with arrangement for identifying interrupt supplying units
Système de traitement de données comprenant un dispositif d' identification des unités envoyant des signaux d'interruption

(30) Priorität: 11.01.1988 DE 3800523
(43) Veröffentlichungstag der Anmeldung: 19.07.1989
(73) Patentinhaber: SIEMENS AKTIENGESELLSCHAFT, 80333 München (DE)
(72) Erfinder: Abert, Michael, D-7551 Au/Rhein (DE)

(56) Entgegenhaltungen:
- EP-A- 0 263 886
- US-A- 3 881 174
- PATENT ABSTRACTS OF JAPAN, Band 9, Nr. 185 (E-332)[1908], 31. Juli 1985;& JP-A-60 53 349 (HITACHI SEISAKUSHO K.K.) 27-03-1985
- PATENT ABSTRACTS OF JAPAN, Band 6, Nr. 112 (P-124)[990] 23. Juni 1982;& JP-A-57 41 727 (HITACHI SEISAKUSHO K.K.) 09-03-1982
- INSTRUMENTS AND EXPERIMENTAL TECHNIQUES, Band 26, Nr. 1, Teil 1, Januar-Februar1983, Seiten 55-57, Plenum Publishing Corp., New York, US; S.G. BOBKOV et al.:"Organization of a multicrate CAMAC system in high-energy physics experiments"

## Beschreibung

Die Erfindung betrifft ein Datenverarbeitungssystem gemäß dem Oberbegriff des Anspruchs 1.

Solche Datenverarbeitungssysteme enthalten oft mehrere Prozessoreinheiten, welche die Funktion einer den Datenverkehr auf der Busleitung steuernden Zentraleinheit (Masterfunktion) übernehmen können. Die sonstigen Einheiten (Slaves) werden von der Mastereinheit gesteuert. Die Masterfunktion kann auf andere Einheiten übertragen werden, selbstverständlich nur dann, wenn sie dazu ausgestattet sind. Das Auftreten besonderer Ereignisse, die eine Datenübertragung zwischen der das Ereignis feststellenden Einheit und einer Prozessoreinheit notwendig macht, wird der Prozessoreinheit mit einem Unterbrechungssignal gemeldet. Ist zwecks Einsparung von Leitungen für mehrere Einheiten nur eine Unterbrechungsleitung vorhanden, so muß der Prozessor zunächst feststellen, von welcher Einheit das Unterbrechungssignal kommt. Hierzu könnte er die Einheiten der Reihe nach abfragen. Es wären dann so viele Abfragen erforderlich, wie Einheiten vorhanden sind, so daß das Identifizieren der die Unterbrechungssignale abgebenden Einheiten sehr lange dauern kann.

Es kann auch, wie in der US-Patentschrift 3 881 174 angegeben, ein Computer ein Unterbrechungs-Quittungssignal auf eine Steuerleitung geben, das von Einheit zu Einheit weitergereicht wird, bis es eine Einheit erreicht, die ein Unterbrechungs-Anforderungssignal abgegeben hat. Diese Einheit kann dann ihre Nachricht absenden. Auch bei diesem Verfahren werden mit einem großen Zeitaufwand alle Einheiten der Reihe nach abgefragt.

Mit einer aus JP-A-60-43349 bekannten Schaltungsanordnung wird die Abfrage der Unterbrechungs-Anforderungssignale abgebenden Einheiten beschleunigt. Hierzu geben diese Einheiten die Unterbrechungs-Anforderungssignale einerseits auf ein UND-Glied, an das ein Eingang einer CPU angeschlossen ist, andererseits in einem (1-aus-n)-Code in einen Pufferspeicher, der wie eine periphere Einheit von der CPU mittels einer Adresse aufgerufen werden kann und der nach einem Aufruf seinen Inhalt auf Datenleitungen schaltet. Mit einem einzigen Aufruf werden daher die Adressen aller ein Unterbrechungs-Anforderungssignal abgebenden Einheiten von der CPU erhalten. Als zusätzlicher Aufwand sind allerdings ein Pufferspeicher und diesen mit den Einheiten verbindende sternförmige Leitungen erforderlich.

Der vorliegenden Erfindung liegt die Aufgabe zugrunde, ein Datenverarbeitungssystem zu schaffen, in dem mehrere Einheiten gemeinsam eine Unterbrechungs-Signalleitung benutzen, aber dennoch das Identifizieren der Unterbrechungssignale abgebenden Einheiten bei geringem Aufwand nur kurze Zeit in Anspruch nimmt.

Erfindungungsgemäß wird diese Aufgabe mit den im Anspruch 1 angegebenen Maßnahmen gelöst.

Zum Identifizieren der Unterbrechungssignale abgebenden Einheiten sind in dem neuen Datenverarbeitungssystem nur Lesevorgänge erforderlich. Im Falle, daß alle Einheiten mit einer Unterbrechungssignal-Identifizierungsadresse angesprochen werden können und je Einheit eine Datenbusleitung vorhanden ist, ist nur ein einziger Lesevorgang erforderlich. In ausgedehnteren Anlagen, in denen die Breite des Datenbusses nicht ausreicht, um die Adressen im (1 aus n)-Code in einem Schritt als Ganzes zu übertragen, ist pro ausgegebener Adresse ein Lesevorgang erforderlich. Gerade in diesem häufig auftretenden Fall dauert die Identifizierung wesentlich kürzere Zeit, als wenn die Einheiten nacheinander abgefragt werden.

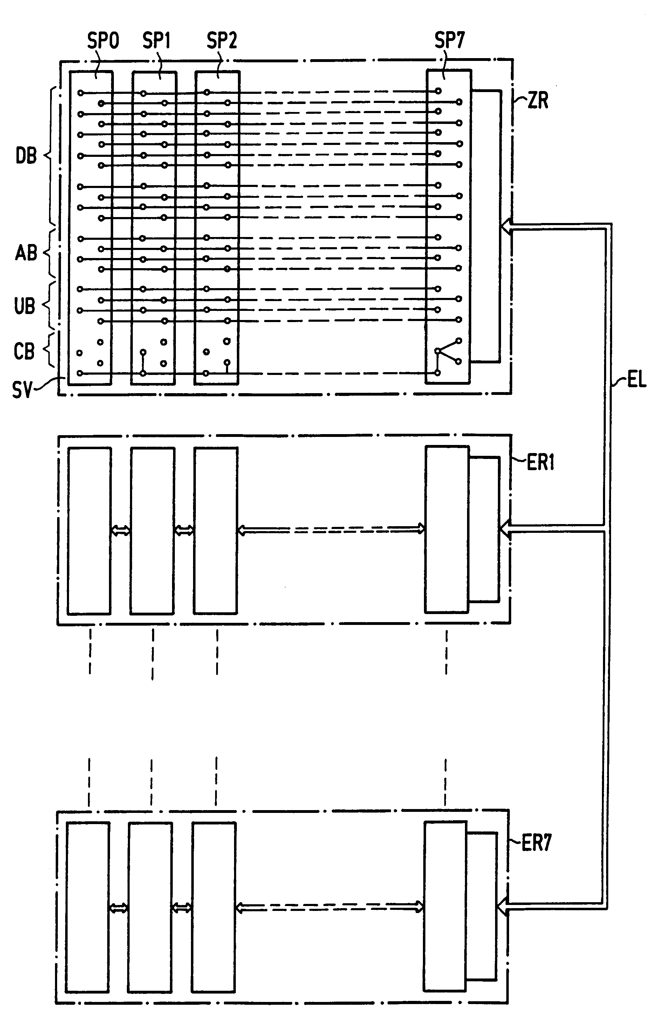

Anhand der Zeichnung, in der ein Ausführungsbeispiel veranschaulicht ist, werden im folgenden die Erfindung sowie deren Weiterbildungen und Vorteile näher beschrieben und erläutert.

In einem Zentralrahmen ZR sind acht Steckplätze SP0, SP1, SP2 ... SP7 mit Buchsenleisten zur Aufnahme von Baugruppen vorhanden. Einander entsprechende Buchsen der Steckplätze sind über Busleitungen miteinander verbunden, und zwar sind acht Datenbusleitungen DB, vier Adreßbusleitungen AB, vier Unterbrechungsbusleitungen UB sowie eine Stromversorgungsleitung HL vorhanden. Weitere Steuerleitungen und Stromversorgungsleitungen sind für die Erläuterung der Erfindung nicht erforderlich und daher wegen der nur schematischen Darstellung des Ausführungsbeispiels nicht in die Figur eingetragen. Jeder Steckplatz enthält eine Gruppe von drei Codierbuchsen CB, die für jeden Steckplatz unterschiedlich an die Leitung HL angeschlossen sind. Damit ergibt sich an jeder Codierbuchsengruppe eine Signalkombination, welche die Adresse für die jeweils gesteckte Baugruppe ist.

Der Einfachheit halber ist im folgenden angenommen, daß jede Baugruppe nur eine Datenverarbeitungseinheit enthält. Damit ist mit den Codierbuchsen nicht nur die Adresse der Baugruppe, sondern auch die der Einheit bestimmt. Es werden Prozessoreinheiten und sonstige Einheiten unterschieden. Die ersten können als Master die Datenübertragung steuern. Die zweiten Einheiten sind z. B. periphere Einheiten oder wie die Einheit, die im Steckplatz SP7 sitzt, eine Koppeleinheit, über die Erweiterungsrahmen ER1 ... ER7 angeschlossen sind, die in gleicher Weise wie der Zentralrahmen ZR acht Steckplätze, Daten, Adreß- und Unterbrechungsbusleitungen sowie Codierbuchsen enthalten. Zunächst wird angenommen, daß die Koppeleinheit nicht gesteckt oder durch eine andere Baugruppe ersetzt ist. Ferner seien vier Prozessoreinheiten und vier sonstige Einheiten im Zentralrahmen enthalten. Jeder Prozessoreinheit ist eine der Unterbrechungsleitungen UB zugeordnet. Tritt in einer Einheit ein Ereignis auf, das einer Prozessoreinheit spontan gemeldet werden und dort zu einer Bearbeitung führen soll, wird in ein 8-Bit-Unterbrechungsregister die Steckplatzadresse im (1 aus 8)-Code eingetragen und eine Unterbrechungsanforderung gestellt, indem auf die der anzusprechenden Prozessorbaugruppe zugeordnete Unterbrechungsleitung ein Unterbrechungssignal geschaltet wird. Die angesprochene Prozessoreinheit versucht dann, Zugriff zum Bus zu erhalten, und, wenn dies geschehen ist, schaltet sie auf den Adressenbus AB eine Unterbrechungssignal-Identifizierungsadresse, die von den Steckplatzadressen verschieden ist. Diese Identifizierungsadresse wirkt in den Einheiten als Lesebefehl für die Inhalte der Unterbrechungsregister. Deren Inhalte werden daher parallel auf den Datenbus DB geschaltet. Die Prozessoreinheit erhält daher ein Datenwort, das anzeigt, von welchen Einheiten Unterbrechungsanforderungen vorliegen. Mit einem einzigen Lesevorgang können somit alle Einheiten ermittelt werden, die ein Unterbrechungssignal abgeben. Die Prozessoreinheit kann dann mit einer dieser Einheiten eine Verbindung herstellen, z. B. einen Meßwert abrufen und dergleichen.

Wie schon erwähnt, können in die Steckplätze Koppeleinheiten gesteckt werden. Im Ausführungsbeispiel enthält der Steckplatz SP7 eine Koppeleinheit, die über eine Leitung EL mit Koppeleinheiten verbunden ist, die in entsprechenden Steckplätzen von Erweiterungsrahmen ER1 ... ER7 sitzen. Die Einheiten der Erweiterungsrahmen sind in gleicher Weise wie die des Zentralrahmens über Busleitungen miteinander verbunden; über die Koppeleinheiten ist der Bus des Zentralrahmens in die Erweiterungsrahmen gewissermaßen verlängert. Selbstverständlich schließt dies nicht aus, daß die Signale von den Koppelbaugruppen in eine für die Übertragung geeignete Form, z. B. in serielle Signale, umgesetzt werden. Mit in den Koppeleinheiten enthaltenen Codierschaltern wird eine Rahmennummer eingestellt, die als Teiladresse dient. Die Adresse einer Einheit eines Erweiterungsrahmens setzt sich zusammen aus der Adresse der Koppeleinheit des Zentralrahmens, der Erweiterungsrahmennummer und der Adresse der Einheit innerhalb des Rahmens. Sind auf den Baugruppen mehrere einzeln adressierbare Einheiten angeordnet, sind für diese noch weitere Subadressen erforderlich.

Es wird wieder angenommen, daß der Zentralrahmen vier Prozessorbaugruppen enthält, von denen jede Unterbrechungsanforderungen bearbeiten kann, und daß die vier Unterbrechungsbusleitungen UB je einer Prozessoreinheit zugeordnet sind. Im allgemeinsten Falle ist jede Einheit mit jeder Unterbrechungsleitung verbunden. Sollen Unterbrechungsanforderungen von sonstigen Einheiten nur von einer bestimmten Prozessoreinheit bearbeitet werden, dann genügt es, diese sonstigen Einheiten nur an die dieser Prozessoreinheit zugeordnete Unterbrechungsleitung anzuschließen. Eine Unterbrechungsanforderung einer Einheit eines Erweiterungsrahmens wird an eine Prozessoreinheit gestellt, indem auf die dieser Prozessoreinheit zugeordnete Unterbrechungsleitung ein Unterbrechungssignal geschaltet wird. Die angesprochene Prozessoreinheit identifiziert - wie oben beschrieben - die Unterbrechung anfordernde Einheit im Zentralrahmen und findet dabei die Koppeleinheit. Sie startet daraus einen zweiten Lesevorgang mit einer Adresse, auf die alle Koppeleinheiten der Erweiterungsrahmen reagieren, die an diese Prozessorbaugruppe eine Unterbrechungsanforderung stellen, indem sie ihre Teiladresse, z. B. die Rahmennummern im (1 aus 8)-Code auf den Datenbus schalten. Die Prozessoreinheit hat damit die Erweiterungsrahmen identifiziert, aus denen Unterbrechungsanforderungen kommen. Sie startet dann einen dritten Lesevorgang mit einer Adresse, die sich aus der Platznummer der Koppelbaugruppe im Zentralrahmen, der Nummer des Erweiterungsrahmens und einer Unterbrechungssignal-Identifizierungsadresse zusammensetzt. Die Baugruppe des adressierten Erweiterungsrahmens, die eine Unterbrechungsanforderung stellen, schalten ihre Adresse in (1 aus 8)-Code auf den Datenbus und werden von der Prozessoreinheit erkannt. Es sind somit nur drei Lesevorgänge erforderlich, um aus einer Vielzahl von möglichen Unterbrechungsquellen die eine Unterbrechung anfordernde herauszufinden.

## Patentansprüche

1. Datenverarbeitungssystem mit mehreren über Adressen-, Daten- und Steuerleitungen miteinander verbundenen Einheiten, von denen mindestens eine eine Prozessoreinheit ist, der von sonstigen Einheiten Unterbrechungssignale zuführbar sind und welche die das Unterbrechungssignal abgebende Einheit aufgrund von Signalen im (1 aus n)-Code auf die Datenleitung geschalteten Adressen ermittelt, **dadurch gekennzeich****net**, daß die Prozessoreinheit auf das Unterbrechungssignal eine Unterbrechungssignal-Identifizierungsadresse auf Adressenleitungen (AB) schaltet, auf deren Empfang diejenigen der sonstigen Einheiten, die ein Unterbrechungssignal abgeben, ihre Adresse im (1 aus n)-Code auf die Datenleitungen schalten, daß mindestens zwei Gruppen von Einheiten vorhanden sind, von denen die eine die Prozessoreinheit und mindestens eine Koppeleinheit enthält, an welche die zweite Gruppe von Einheiten angeschlossen ist, daß die Prozessoreinheit auf ein Unterbrechungssignal eine erste Unterbrechungssignal-Identifizierungsadresse auf die Adressenleitungen schaltet, auf deren Empfang die Einheiten der ersten Gruppe, die ein Unterbrechungssignal abgeben, ihre Adressen im (1 aus n)-Code auf die Datenleitungen schalten, daß im Falle, daß eine Koppeleinheit ihre Adresse auf die Datenleitungen schaltet, die Prozessoreinheit eine zweite Unterbrechungssignal-Identifizierungsadresse auf die Datenleitungen schaltet, nach deren Empfang die Koppeleinheiten der Erweiterungsgruppen ihre Adresse im (1 aus n)-Code auf die Datenleitungen schalten, über die ein Unterbrechungssignal abgegeben wird, und daß darauf die Prozessoreinheit eine dritte Unterbrechungssignal-Identifizierungsadresse ausgibt, nach deren Empfang die Erweiterungseinheiten der adressierten Erweiterungsgruppe, die ein Unterbrechungssignal abgegeben haben, ihre Adressen im (1 aus n)-Code auf die Datenleitungen schalten.

2. Datenverarbeitungssystem nach Anspruch 1, **dadurch gekennzeichnet**, daß im Falle von mehreren Prozessoreinheiten je Prozessoreinheit eine Unterbrechungsleitung vorhanden ist, an welche die sonstigen Einheiten angeschlossen sind, und daß die eine Unterbrechung eines einer Prozessoreinheit anfordernden sonstigen Einheiten auf die dieser Prozessoreinheit zugeordnete Unterbrechungsleitung ein Unterbrechungssignal schalten.

3. Datenverarbeitungssystem nach Anspruch 2, **dadurch gekennzeichnet**, daß die Einheiten auf steckbaren Baugruppen und die Baugruppen mit Einheiten einer Einheitengruppe in einem Rahmen (ZR, ER1 ... ER7) angeordnet sind.

## Claims

1. Data processing system having several units connected together by way of address, data and control lines, at least one of these units being a processor unit to which there can be delivered interrupt signals from other units and which, on the basis of signals in (1-out-of-n) code addresses (sic) connected to the data line, identifies the unit supplying the interrupt signal, characterised in that, upon the interrupt signal, the processor unit connects an interrupt signal identification address to address lines (AB), upon receipt of which those of the other units which are supplying an interrupt signal connect their address in (1-out-of-n) code to the data lines, in that there are at least two groups of units, one of which comprises the processor unit and at least one coupling unit to which the second group of units is connected, in that, upon an interrupt signal, the processor unit connects a first interrupt signal identification address to the address lines, upon receipt of which the units of the first group that are supplying an interrupt signal connect their addresses in (1-out-of-n) code to the data lines, in that, if it is the case that a coupling unit connects its address to the data lines, the processor unit connects a second interrupt signal identification address to the data lines, after receipt of which the coupling units of the expansion groups connect their address in (1-out-of-n) code to the data lines by way of which an interrupt signal is supplied, and in that, after that, the processor unit outputs a third interrupt signal identification address, after receipt of which the expansion units of the addressed expansion group that have supplied an interrupt signal, connect their addresses in (1-out-of-n) code to the data lines.

2. Data processing system according to claim 1, characterised in that, in the case of several processor units, for each processor unit there is an interrupt line to which the other units are connected, and in that the other units requesting an interruption of a processor unit connect an interrupt signal to the interrupt line assigned to this processor unit.

3. Data processing system according to claim 2, characterised in that the units are arranged on plug-in subassemblies and the subassemblies are arranged with units of a unit group in a frame (ZR, ER1 ... ER7).

## Revendications

1. Système de traitement de données comprenant plusieurs unités, qui sont reliées les unes aux autres par des lignes d'adresses, de données et de commandes, et dont au moins l'une est une unité de processeur, à laquelle on peut envoyer des signaux d'interruption par d'autres unités, et qui détermine l'unité fournissant le signal d'interruption en se basant sur des adresses communiquées par des signaux en code (1 parmi n) sur la ligne de données, caractérisé en ce que l'unité de processeur communique sur des lignes (AB) d'adresses en réponse au signal d'interruption une adresse d'identification du signal d'interruption, à la réception de laquelle celles des autres unités, qui fournissent un signal d'interruption, communiquent leur adresse en code (1 parmi n) sur les lignes de données, au moins deux groupes d'unités sont disponibles, dont l'un comprend l'unité de processeur et au moins une unité de connexion à laquelle est relié le second groupe d'unités, I'unité de processeur communique sur les lignes d'adresses en réponse à un signal d'interruption une première adresse d'identification du signal d'interruption, à la réception de laquelle les unités du premier groupe, qui fournissent un signal d'interruption, communiquent leurs adresses sur les lignes de données en code (1 parmi n), I'unité de processeur communique sur les lignes de données, dans le cas où une unité de connexion communique son adresse sur les lignes de données, une seconde adresse d'identification du signal d'interruption, à la réception de laquelle les unités de connexion des groupes d'extension communiquent leur adresse en code (1 parmi n) sur les lignes de données, par lesquelles est fourni un signal d'interruption, et l'unité de processeur fournit ensuite une troisième adresse d'identification du signal d'interruption, à la réception de laquelle les unités d'extension du groupe d'extension adressé qui ont fourni un signal d'interruption, communiquent sur les lignes de données leurs adresses en code (1 parmi n).

2. Système de traitement de données suivant la revendication 1, caractérisé en ce qu'en cas de plusieurs unités de processeur, chaque unité de processeur dispose d'une ligne d'interruption, à laquelle les autres unités sont connectées, et les autres unités demandant une interruption d'une unité de processeur communiquent un signal d'interruption sur la ligne d'interruption associée à cette unité de processeur.

3. Système de traitement de données suivant la revendication 2, caractérisé en ce que les unités sont disposées sur des modules enfichables et les modules comportant des unités d'un groupe d'unités sont disposés dans un cadre (ZR, ER1 ... ER7).
